# EUROPÄISCHE PATENTANMELDUNG

(11) **EP 0 701 086 A1**
(43) Veröffentlichungstag der Anmeldung: **13.03.1996**
(21) Anmeldenummer: 95810089.3
(22) Anmeldetag: 10.02.1995
(51) Int. Cl.: F16L 58/10

(54) **Aushärtbarer Schlauch zum Auskleiden und Herstellen von Rohrleitungen sowie Verfahren zur Herstellung desselben**

(30) Priorität: 10.09.1994 CH 2753/94
(71) Anmelder: Hartmann, Peter, CH-8706 Feldmeilen (CH)
(72) Erfinder: Hartmann, Peter, CH-8706 Feldmeilen (CH)
(74) Vertreter: Meyer-Saurer, Reinhardt

(57) **Zusammenfassung**

Für die Innenauskleidung von bestehenden Rohrleitungen oder zur Herstellung von Rohren wird ein Schlauch(1)aus verschiedenen Materialbahnen (5,7,9) gefertigt. Der Schlauch (1) besteht aus einer mit zwei elastischen Bahnen (5.1,5.2) gebildeten Innenabdeckung (5) und einer mit zwei elastischen Bahnen (9.1,9.2) gebildeten Aussenabdeckung (9). Zwischen den beiden Abdeckungen (5,9) liegt eine Zugbahn (7) aus mindestens einer Glasfaserbahn. Die Zugbahn (7) wird mit einer Ueberlappung (a) an ihren Längsränder versehen. Die Zugbahn (7) wird harzimprägniert und auf den gewünschten Durchmesser kalibriert und dann zusammengelegt. Der Schlauch (1) kann kontinuierlich und in beliebiger Länge hergestellt werden; er wird an Ort und Stelle aufgeblasen oder über einen Dorn gezogen und durch Erwärmen gehärtet.

## Beschreibung

Die Erfindung betrifft einen Schlauch mit einer aus biegsamen Materialbahnen zusammengesetzten Schlauchwand nach dem Oberbegriff des Patentanspruchs 1.

Aus Materialbahnen hergestellte Schläuche sind bekannt. Sie werden als Innenauskleidung von bestehenden Rohrleitungen eingesetzt, deren Wandung abgenützt oder beschädigt ist, wodurch ein kostspieliger Ausbau und Ersatz der Rohrleitung vermieden werden kann.

Aus der DE-B-347364 ist ein Schlauch für Rohrauskleidungen bekannt, dessen aufeinanderliegende Materialbahnen aus Glasgewebe oder -gewirke, Filz oder Vlies zu einem Schlauch geformt sind. Dann erfolgt eine Harztränkung und nach Einbringen in die Rohrleitung eine Aushärtung durch UV-Strahlung. Da das Rohr einen bestimmten, nicht veränderbaren Durchmesser aufweist, können sich zwischen der Rohrleitung und dem Rohr unerwünschte Hohlräume bilden.

Aufgabe der Erfindung ist es, einen Schlauch der eingangs genannten Art zu schaffen, der sich problemlos sowohl zu einem Leitungsrohr als auch als Innenauskleidung von abgenützten oder beschädigten Rohrleitungen verwenden lässt. Diese Aufgabe wird durch die kennzeichnenden Merkmale des Anspruchs 1 gelöst.

Die Erfindung wird nachfolgend beispielsweise anhand der Zeichnung näher erläutert. Es zeigen:
- Fig. 1: einen Querschnitt eines um einen Wickelkern geformten Schlauches mit einer Zugbahn, einer Innenabdeckung und einer Aussenabdeckung,
- Fig. 2: einen Querschnitt eines Schlauches, der zu den beim Schlauch nach Fig.1 eingesetzten Materialbahnen weitere, um den Kern geformte Materialbahnen aufweist,
- Fig. 3: eine schematische Seitenansicht einer Anlage zum Formen des Schlauches z.B. nach Fig.1 und 2,
- Fig. 4: eine Draufsicht der Anlage nach Fig.3,
- Fig. 5: eine Seitenansicht einer Materialbahn-Rolle beim Abwickeln einer Bahn auf den Wickelkern,
- Fig. 6: einen Schnitt längs der Linie VI-VI in Fig.4 mit einer Kupplung zur Verbindung von zwei benachbarten Kernsegmenten,
- Fig. 7: eine Draufsicht der Kupplung nach Fig.6,
- Fig. 8: einen Querschnitt eines aus einem Mittelteil und zwei Randstücken - eines davon ausgefahren - bestehenden Kernsegmentes, von dem mit mehreren Kernsegmenten der die Anlage durchquerende Wickelkern gebildet ist,
- Fig. 9: einen Längsschnitt einer Harzstation und
- Fig.10: einen um 90° gedrehten Längsschnitt der Harzstation nach Fig.9

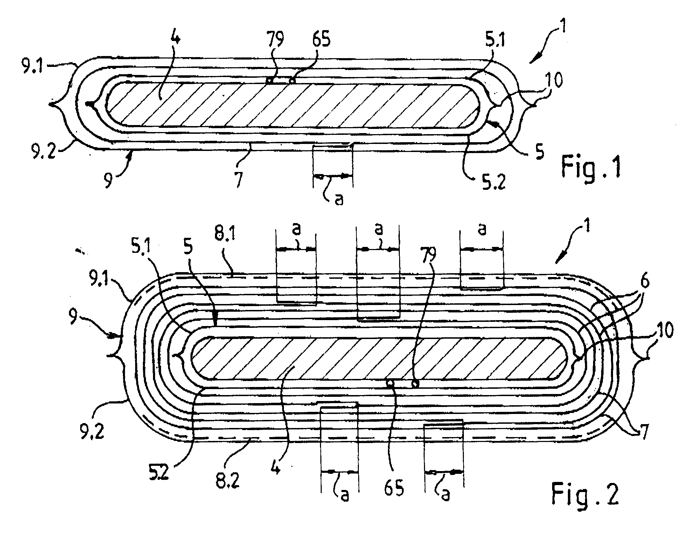

Es wird von der Ueberlegung ausgegangen, dass der erfindungsgemässe Schlauch in einer Fertigungsanlage kontinuierlich aus flexiblen Materialbahnen als Schlauch soweit fertiggestellt wird, dass dann nur noch die Anpassung an die Endverwendung, sei es als Leitungsrohr oder als Innenauskleidung, erfolgen muss. Je nach Durchmesser und Beanspruchung wird die Rohrwandung aus einer oder mehreren Materialbahnen gebildet. Fig.1 und 2 zeigen Querschnitte von Schläuchen 1, die während der Herstellung um einen noch zu beschreibenden Kern 4 gewickelt werden, wobei zur besseren Uebersicht die Lagen der übereinanderliegenden Materialbahnen einen in Wirklichkeit nicht vorhandenen Abstand aufweisen.

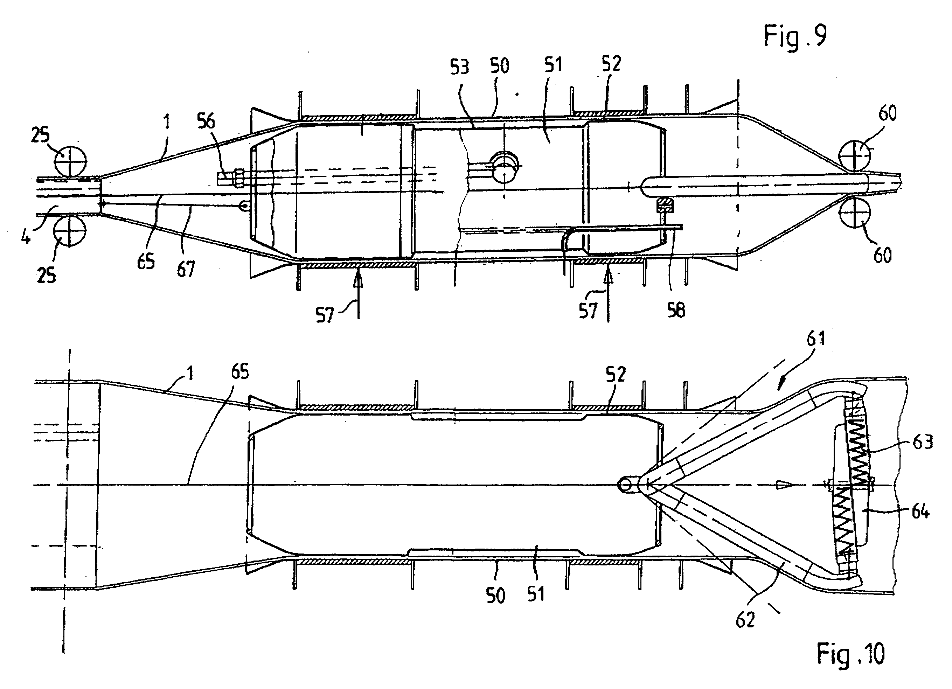

In Fig .1 weist der Querschnitt des Schlauches 1 von innen nach aussen eine aus zwei Innenbahnen 5.1,5.2 bestehende schlauchförmige Innenabdeckung 5, eine Zugbahn 7 und eine aus zwei Aussenbahnen 9.1,9.2 bestehende Schlauchförmige Aussenabdeckung 9 auf. Die beiden Innenbahnen 5.1,5.2 sind an ihren Längsrändern 10 miteinander verschweisst und bilden so die schlauchförmige Innenabdeckung 5. In gleicher Weise werden die beiden Aussenbahnen 9.1,9.2, welche die Zugbahn 7 überragen, an ihren Längsrändern 10 miteinander verschweisst und bilden die schlauchförmige Aussenabdeckung 9. Die zwischen der Innenabdeckung 5 und der Aussenabdeckung 9 liegende Zugbahn 7 wird in einer noch zu beschreibenden Harzstation Fig.9 und 10 harzimprägniert, womit die eigentliche Schlauchfertigung beendet ist. Wird der Schlauch 1 als Rohrleitung verwendet, wird er in eine Rohrform gelegt, darin aufgeblasen oder über einen Dorn gezogen, und gehärtet, z.B. durch eine durch das Rohr gezogene Licht-oder Wärmequelle Bei Verwendung als Rohrauskleidung wird der Schlauch 1 gefaltet in die bestehende Leitung verlegt, dort aufgeblasen und dann in gleicher Weise gehärtet.

Für die besondere Eignung des Schlauchs 1 als Rohrauskleidung wird die Zugbahn 7 an ihren Längsrändern nicht zu einem Schlauch fest verbunden, sondern ihre Ränder werden nur aufeinandergelegt; damit wird eine Ueberlappung a gebildet. Beim Aufblasen des Schlauchs 1 kann sich diese Ueberlappung a verschieben, sodass sich der Schlauch 1 an etwaige Unebenheiten der Rohrinnenwandung lückenlos anlegen kann und nach dem Aushärten eine mit der Rohrwandung festanliegende oder festverbundene Einheit bildet. Die Innenbahnen 5.1,5.2 und die Aussenbahnen 9.1,9.2 bestehen aus einem dehnbaren Material und behindern dadurch eine Verschiebung der Ueberlappungen a der Zugbahn 7 nicht. Die Ueberlappung a beträgt bezogen auf den Umfang des Kerns 4 etwa 10-30%, im Mittel etwa 15%.

Bei grösseren Rohrdurchmessern kann die Zugbahn aus zwei Bahnen 7 mit zwei Ueberlappungen a gebildet werden. Wird der Schlauch 1 bereits unmittelbar nach seiner Fertigung und Harzimprägnierung eingebaut, kann auf die Verwendung einer Innenabdeckung 5 verzichtet werden. Der Schlauch 1 wird in diesem Fall an Ort und Stelle eingebaut und anschliessend gehärtet, z.B. durch Erwärmen.Diese Herstellungsart ist nur dort anwendbar, wo Fertigung und Einbau nahe beisammen sind.

Der in Fig.2 dargestellte Querschnitt des Schlauchs 1 ist aus denselben Bahnen geformt wie derjenige nach Fig.1, jedoch werden zusätzlich Vliesstoffbahnen 6 und mehrere Zugbahnen 7 in beliebiger Anordnung aufeinandergelegt. Als Beispiel zeigt der Schlauch 1 in Fig.2 eine Ausführung grösserer Wandstärke und grösserer Wandfestigkeit, bei welcher von innen nach aussen auf die Innenabdeckung 5 eine Vliesstoffbahn 6 folgt. Dann folgen eine Zugbahn 7, zwei weitere Vliesstoffbahnen 6, eine weitere Zugbahn 7 und abschliessend die Aussenabdeckung 9. Je zwei Innenbahnen 5.1,5.2, bzw. zwei Aussenbahnen 9.1,9.2 werden an ihren Längsrändern 10 verschweisst, wie dies auch bei dem Schlauch nach Fig.1 der Fall ist, und bilden dann die Innenabdeckung 5 und die Aussenabdeckung 9. Die Aussenbahnen 9.1,9.2 der Schläuche 1,2 können innenseitig mit einer Sicherungsbahn 8.1,8.2 belegt und teilweise mit diesen verklebt sein. Die Sicherungsbahnen 8.1,8.2 verhindern das Rutschen der Aussenabdeckung 9 auf der benachbarten Verstärkungsbahn 7. Die Sicherungsbahnen 8.1,8.2 erstrecken sich nicht bis zu den Längsrändern 10 der Aussenbahnen 9.1,9.2, siehe Fig.2. Mit Ausnahme der beiden Abdeckungen 5,9 werden alle Vliesstoffbahnen 6 und Zugbahnen 7 mit Ueberlappungen a versehen, so dass der ganze Schlauch 1 beim Einbau sich vollständig an die Innenwand anlegen kann. Erst an Ort und Stelle erfolgt die Aushärtung der harzimprägnierten Vliesstoff-und Zugbahnen 6,7 und damit die Bildung eines massiven Rohrkörpers. Wesentlich ist, dass die Ueberlappungen a der einzelnen Bahnen versetzt zueinander liegen, wie dies Fig.2 zeigt, um die Bildung von Wulsten zu vermeiden.

Geeignete Materialien für die einzelnen Bahnen sind:

Innen-und Aussenabdeckung 5: eine dünne elastische, styrolbeständige Folie z.B. aus Polyethylen, Polypropylen, Polyurethan, Polyamid. Sie kann auch eine Verbundfolie aus diesen Materialien und als Aussenabdeckung 9 pigmentiert oder aluminiumbeschichtet sein.

Vliesstoffbahn 6: Natur-oder Kunststoff-Fasern oder Gemisch daraus.
Zugbahn 7: Glasfaserbahnen, Matten oder Kombinationen daraus zur Aufnahme der auf den Schlauch wirkenden Kräfte, insbesondere Zugkräfte.
Sicherungsbahn 8: Bahn aus organischen Wirrfasern, wie Zellstoff, Papierarten.

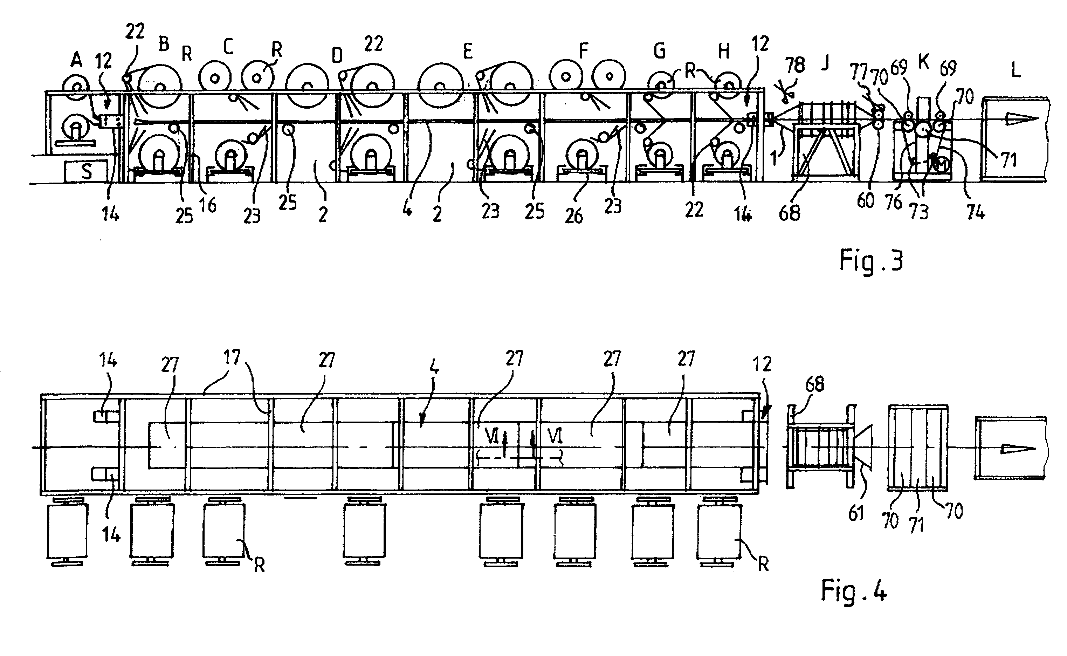

In Fig.3 und 4 ist eine Anlage schematisch dargestellt, mit der die Schläuche 1 hergestellt werden. Sie besteht aus mehreren Stationen A-H, von denen die Bahnen von Rollen R abgezogen werden und um den Kern 4 zu einem ein-oder mehrlagigen Schlauch beliebiger Länge gewickelt, in einer Harzstation J imprägniert und kontinuierlich durch eine Ausziehstation K abgezogen und in eine Ablage L abgelegt werden. In jeder Station B-F sind mehrere Rollen R, z.B. 2-4 Rollen drehbar gelagert, von denen jeweils ein Teil der Rollen R abgewickelt wird und die anderen Rollen R als Reserve dienen. Leerräume 2 können ebenfalls mit Rollen R ausgerüstet werden. In den Stationen A,G und H werden jeweils zwei Bahnen gleichzeitig abgewickelt, in A und H zur Herstellung der Innen-und Aussen-Abdeckungen 5,9 und in G zum gleichzeitigen Aufbringen der beiden Sicherungsbahnen 8.1,8.2 vor dem Aufbringen der Aussenabdeckung 9. In den Stationen B-F werden Vliesstoffbahnen 6 oder Zugbahnen 7 abgewickelt, z.B. Vliesstoffbahnen 6 in den Stationen B,D,E und Zugbahnen 7 in den Stationen C und F. Die Reihenfolge der Stationen BF kann jedoch beliebig variiert werden. Nicht benötigte Stationen, z.B. bei der Herstellung des Schlauchs nach Fig.1, können ohne Aenderung der Anlage abgeschaltet werden.

Zwischen den Stationen A und B sowie nach der Station H ist je eine Schweissstation 12 angeordnet, die zwei Schweissstellen 14 zum Schweissen der Längsränder 10 der Innenbahnen 5.1,5.2 und der Aussenbahnen 9.1,9.2 aufweist.

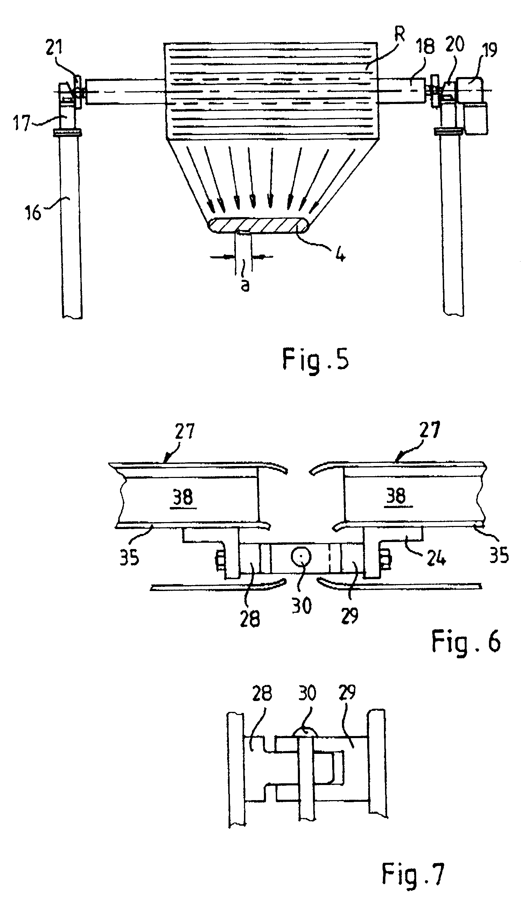

Die Anlage, siehe Fig.3, ist ein aus Pfosten 16 und Stäben 17 bestehendes Gestell, auf dem die Rollen R drehbar abgestützt und angetrieben sind, siehe Fig.5. Eine Rolle R wird auf einer Welle, z.B. einer pneumatisch betätigbaren Spannwelle 18, befestigt. Je nach der vorgesehenen Lage der Ueberlappung a wird die Rolle R seitlich zum Kern 4 auf der Spannwelle 18 fixiert, die von einem Motor, z.B. einen Getriebemotor 19, angetrieben wird. Der Getriebemotor 19 ist an einem Sockel 20 gelagert und mit seiner Welle lösbar mit der Welle 18 gekuppelt. Ist eine Rolle R vollständig abgewickelt, wird das Ende der Bahn mit dem Anfang der benachbarten Rolle R verklebt und so die ununterbrochene Fertigung des Schlauchs 1 gewährleistet. Die Spannwelle 18 mit der abgewickelten Rolle kann nach Lösen der Verbindung mit dem Getriebemotor 19 leicht entfernt werden, da sie in geteilten Lagern 21 gelagert ist. Anstelle der entfernten Rolle wird eine Welle 18 mit einer neuen Rolle R mittels eines Hebegerätes, z.B. eines Krans, eingesetzt und nach Schliessen des Lagers 18 mit dem Getriebemotor 19 gekuppelt.

In Fig.5 ist das Wickeln der Bahn auf den Kern 4 vereinfacht dargestellt. Wie aus Fig.3 ersichtlich ist, wird die abgewickelte Bahn über eine Umlenkrolle 22 geführt und mit einer Leitbahn 23, z.B. einem Formblech, auf den Kern 4 gelenkt. An den Kern 4 wird die Bahn durch Führungsrollen 25 geführt, die seitlich, oben und unten am Kern 4 anliegen. Die Rollen R auf der Unterseite des Kerns 4 werden in gleicher Weise auf Spannwellen 18 fixiert, die aber nicht direkt, sondern mittels speziellen Rollwagen 26 in Position gebracht werden, die schubladenartig seitlich ausziehbar sind, siehe Fig.4, in welcher Lage die Rollen R problemlos mit einem Hebegerät gewechselt werden können.

In Fig.3 weisen die Stationen A,G und H keine Reserverollen auf. Die dort verwendeten Bahnen sind wesentlich dünner als die Vliesstoff-und Zugbahnen 6,7 und brauchen deshalb wegen ihrer grossen Länge nur selten gewechselt zu werden.

In Fig.4 sind die oberen Rollen R zur besseren Sichtbarkeit des Kerns 4 weggelassen. Der Kern 4 erstreckt sich von der Station B bis zur Station H und liegt mit Ausnahme des Endes an der Station B frei auf Führungsrollen 25 im Gestell, um den ununterbrochenen Transport der um den Kern 4 gewickelten Bahnen 6-9 - die Innenabdeckung 5 ausgenommen - zu ermöglichen. Die Führungsrollen 25 gewährleisten das Einziehen und Formen der Bahnen 6-9 um den Kern 4.

Der Kern 4 besteht aus mehreren nebeneinanderliegenden, im wesentlichen hohlen Kernsegmenten 27, die mit einer aus zwei Laschen 28,29 und einem Bolzen 30 bestehenden Kupplung miteinander verbunden sind, siehe Fig.6 und 7.

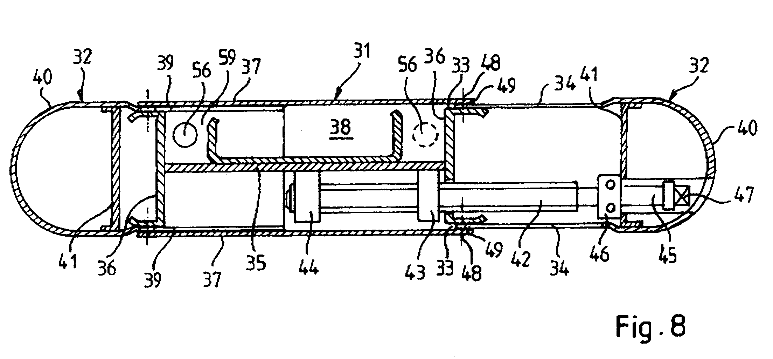

Die Laschen 28,29 sind an Winkelstücken 24 angeordnet, die an der Unterseite von Stegen 35 (siehe Fig. 8), befestigt sind. Die Kernsegmente 27 sind dreiteilig, siehe Fig.8. An einem Mittelteil 31 schliessen zwei an seinen Längsseiten angeordnete, abgerundete Randstücke 32 an, die verstellbar sind. Beim Mittelteil 31 sind zwei längsverlaufende, mit einem Steg 35 verbundene U-Profile 36 durch eine dünne Abdeckung 37 abgedeckt und bilden zusammen einen kastenförmigen Hohlkörper. Im oberen Teil erstreckt sich über die gesamte Länge des Mittelteils 31 ein U-förmiger Kanal 38. In diesem liegt bei der Herstellung des Schlauchs 1 die in der Station A hergestellte und geschweisste, schlauchförmige Innenabdeckung 5. Erst nach der Harzimprägnierung wird die Innenabdeckung 5 entfaltet und legt sich an die harzimprägnierte Innenwand des Schlauchs 1 an. Die schalenförmigen Randstücke 32 bestehen aus zwei ebenen Wandteilen 39 und einem Wölbungsteil 40, welche Teile am Uebergang der beiden Teile 39,40 durch einen U-förmigen Steg 41 ausgesteift sind.

Die ebenen Wandteile 39 der Randstücke 32 erstrecken sich unter Deckwände 37 des Mittelteils 31 und weisen Schlitze 34 auf, die mit punktförmigen Befestigungsstellen 48 eine Geradführung für die Randstücke 32 bilden. Die Befestigungsstellen 48 halten den Schenkel des U-Profils 36 und die Abdeckung 37 in einem etwas grösseren Abstand als die Stärke der Abdeckung 37. Die Befestigungsstellen 48 können z.B. eine Nietverbindung mit einer Scheibe 49 als Distanzhalter und Führung für den Schlitz 34 sein. Im unteren Teil des Mittelteils 31 ist ein Spindeltrieb mit einer Spindel 42, einer zweiteiligen Spindelmutter 43 und einer Spindelführung 44 gelagert, wobei eine Verlängerung 45 der Spindel 42 in den Wölbungsteil 40 ragt und über eine rotierende Kupplung, z.B. ein Kugel-oder Rollenlager 46, mit dem Versteifungssteg 41 verbunden ist und an ihrem freienEnde ein Profil, z.B. ein Vierkantkopf 47, angeformt ist. Mit einem entsprechend ausgebildeten Werkzeug kann durch eine Oeffnung 54 im Randstück 32 die Spindel 42 rotiert werden, was eine Verschiebung des Randstückes 32 und damit eine Aenderung der Breite des Kernsegmentes 27 bewirkt. Versetzt zur Spindel 42 ist ein gleicher Spindeltrieb (nicht dargestellt) für das zweite gegenüberliegende Randstück 32 angeordnet. Werden grössere oder kleinere Segmentbreiten verlangt, müssen andere Kernsegmente, jedoch derselben Art, bereitgestellt werden. Für Schlauchdurchmesser von etwa 150 mm bis etwa 800 mm werden fünf Grössen von Kernsegmenten 27 zur Bildung entsprechender Schläuche 1 benötigt.

Ist der Schlauch 1 nach Aufbringen der schlauchförmigen Aussenabdeckung 9 und nach dem Schweissen der Längsränder 10 in der Station H fertiggeformt, wird er in der Harzstation J mit Harz, z.B. einem Polyester-, Polyurethan-oder Epoxid-Harz getränkt, siehe Fig.9 und 10. Die Harzstation J weist einen kreiszylindrischen Aussenmantel 50 und einen innenliegenden, dem Umfang des Kerns 4 entsprechenden Zylinder 51 auf. Durch den dazwischen gebildeten Spalt 52 wird der zuerst um den Kern 4 geformte Schlauch 1 geführt und durch Nachgeben in den Ueberlappungen a kalibriert. Der Zylinder 51 weist eine kreiszylindrische Einschnürung 53 auf, die eine Harzkammer für die Verteilung des durch mindestens eine Leitung 56 eingespeisten Harzes bildet. Beideits der Einschnürung 53 ist durch einen Pfeil 57 eine Druckluftzufuhr von ca. 0,5-4 bar angedeutet, durch welche die Reibung des Schlauches 1 im Spalt 52 verringert wird. Das Harz wird mit einem Druck von 1-20 bar eingespeist, womit eine gute Durchtränkung der aufeinanderliegenden Materialbahnen erreicht wird. Weiter sind noch Leitungen 58 zur Zuleitung von Lösungsmittel für die Reinigung der Harzkammer vorgesehen, die jedoch bei der Schlauchfertigung nicht angeschlossen sind.

Der Schlauch 1 verlässt den Kern 4 als flacher Schlauch, wird in der Harzstation J zu einem Rohr geformt, zwischen dem Aussenmantel 50 und dem Zylinder 51 kalibriert und gleichzeitig mit Harz imprägniert. Ausgangseitig wird der Schlauch 1 durch Formrollen 60 flachgedrückt und zu der Ausziehstation K geführt, worauf der fertige, noch nicht gehärtete, Schlauch 1 in die Ablage L abgelegt wird, z.B. als gefaltete, aufeinanderliegende Lagen.

Die im Kanal 38 der Kernsegmente 27 zusammengefaltet liegende Innenabdeckung 5 gelangt ins Innere des Zylinders 51, an dessen Ende sie durch eine federnde Gabel 61 entfaltet wird, die sie mit ihren Schenkeln 62 an den Schlauch 1 drückt (Fig.4 und 10). Die Schenkel 62 werden durch Federn 63 auseinandergedrückt, die zum Schutz des Schlauches 1 in zwei zueinander beweglichen, an den Gabelenden gelagerten Halbschalen 64 liegen. Die Gabel 61 ist durch eine Schnur 65 od.dgl. gehalten, die sich durch den ganzen Kern 4 bis zum Anfang der Station A erstreckt und beim Bilden der Innenabdeckung 5 im Innern derselben angeordnet wird, siehe Fig.1 und 2. Ebenso kann der Zylinder 51 der Harzstation J nicht am Aussenmantel 50 abgestützt werden, sondern wird am Ende des Kerns 4 mit einem 3-Punkt-Drahtsystem 67 od.dgl. festgehalten. Dagegen ist der Aussenmantel 50 auf einem Gestell 68 (Fig.3 und 4) befestigt und kann die beim Ausziehen des Schlauches 1 entstehenden Kräfte aufnehmen. Auch die Leitung oder Leitungen 56 für die Harzzufuhr müssen im Innern des Kerns 4 geführt werden, wofür beidseits des Kanals 38 Durchgänge 59 ausgespart sind. Auch eine zweite Harzleitung 56 kann bei der Herstellung grösserer Schläuche vorgesehen werden.
In der Ausziehstation L wird dem Schlauch 1 eine bestimmte Geschwindigkeit erteilt, die zur Regelung der Motoren für die Rollen R in den Stationen A-H benützt wird. Mit einer zentralen Steueranlage S kann die gesamte Anlage betrieben werden. In der Ausziehstation K ist in der Mitte unterhalb von zwei Walzenpaaren 69,70 eine Walze 71 gelagert. Die Walze 71 und die unteren Walzen 70 der Walzenpaare 69,70 sind zusammen mit Umlenkrollen 73 von einem Flachriemen 74 umschlungen und motorisch angetrieben, wobei die Walze 71 in einen Ständer 76 höhen-verstellbar gelagert ist. Die Walzen der Walzenpaare 69,70 bilden einen Spalt für den Durchgang des Schlauches 1, der sich schlaufenförmig um die Walze 71 windet und dabei von dem Flachriemen 74 von unten her an die Walze 70 gedrückt wird. Damit kann der Schlauch 1 ohne Rutschen und ohne ihn zu stark zu pressen, durch die Ausziehstation K geführt werden. Die Walzen 70 der Walzenpaare 69,70 und die Walze 71 werden gemeinsam über einen Kettentrieb durch einen Motor M angetrieben. Die in der Ausziehstation K gemessene Geschwindigkeit des Schlauches 1 wird zur Steuerung der Getriebemotoren 19 zum Antrieb der Rollen R benützt, wobei durch die Steueranlage S auch die Zu- und Abschaltung der Rollen R und alle übrigen Funktionen der Anlage gesteuert werden.

Ist die gewünschte Schlauchlänge hergestellt, wird der Schlauch 1 durch eine, zwischen der Harzstation J und der Ausziehstation K liegende, schematisch dargestellte Schere 77 entzweigeschnitten. Muss eine andere Schlauchgrösse hergestellt werden, muss der Schlauch 1 zudem durch eine weitere, vor der Harzstation J liegende, schematisch dargestellte Schere 78 entzweigeschnitten und der bereits in der Harzstation befindliche Schlauchteil entfernt werden, wobei jedoch die Schnur 65, welche die Gabel 61 hält, und das Drahtsystem 67, welches den Zylinder 51 der Harzstation J hält, und eine Drehung desselben verhindert, nicht geschnitten werden. Es kann auch eine Zugleine 79 bei der Bildung des Schlauches 1 eingelegt werden, siehe Fig.1 und 2, die wie die Schnur 65 auf der Innenseite der Innenabdeckung 5 liegt und sich mit dem auf dem Kern 4 fortschreitenden Schlauch 1 bewegt. Wird eine bestimmte Schlauchlänge abgeschnitten und entweder zur Rohrherstellung oder zur Rohrauskleidung verwendet, steht eine gleichlanges Stück Zugleine 65 zur Verfügung, mit der z.B. ein Härtungsgerät zum Aushärten durch den Schlauch 1 gezogen werden kann.

Mit der beschriebenen Anlage können Schläuche beliebiger Lange kontinuierlich und endlos hergestellt werden, die je nach Verwendungszweck unterschiedliche Wandstärke und unterschiedlichen Wandaufbau aufweisen und in beliebiger Länge abgeschnitten werden können.

Liste der Bezugszeichen

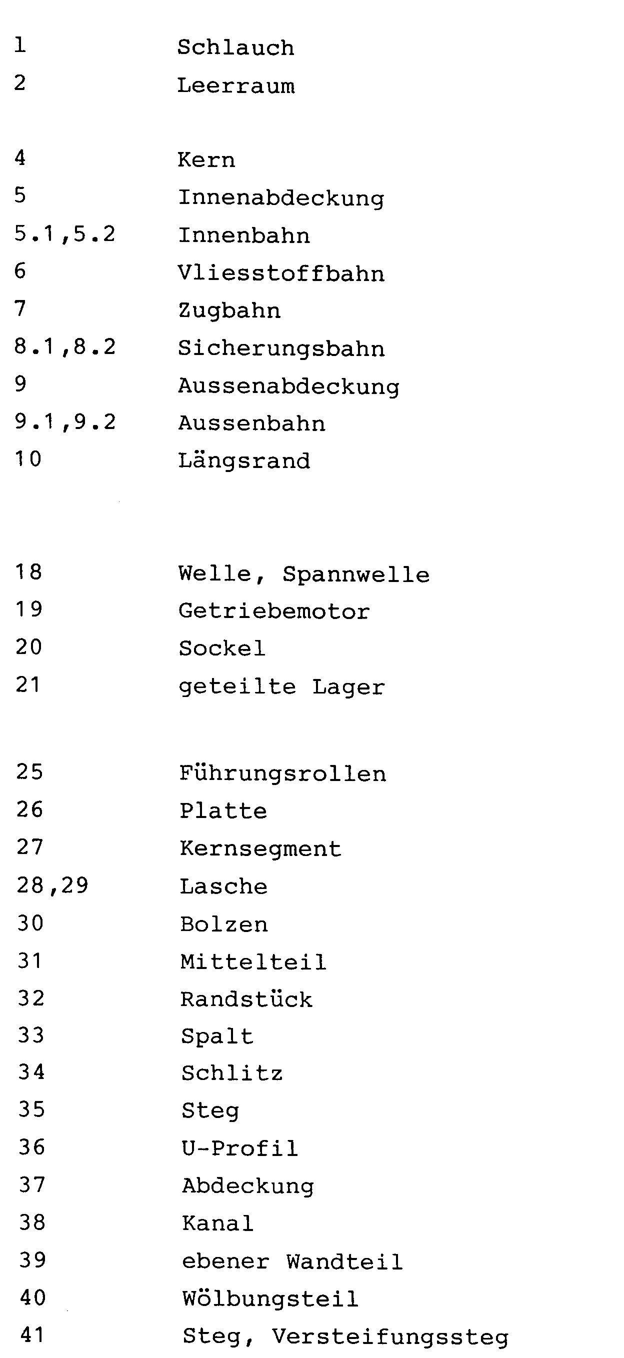

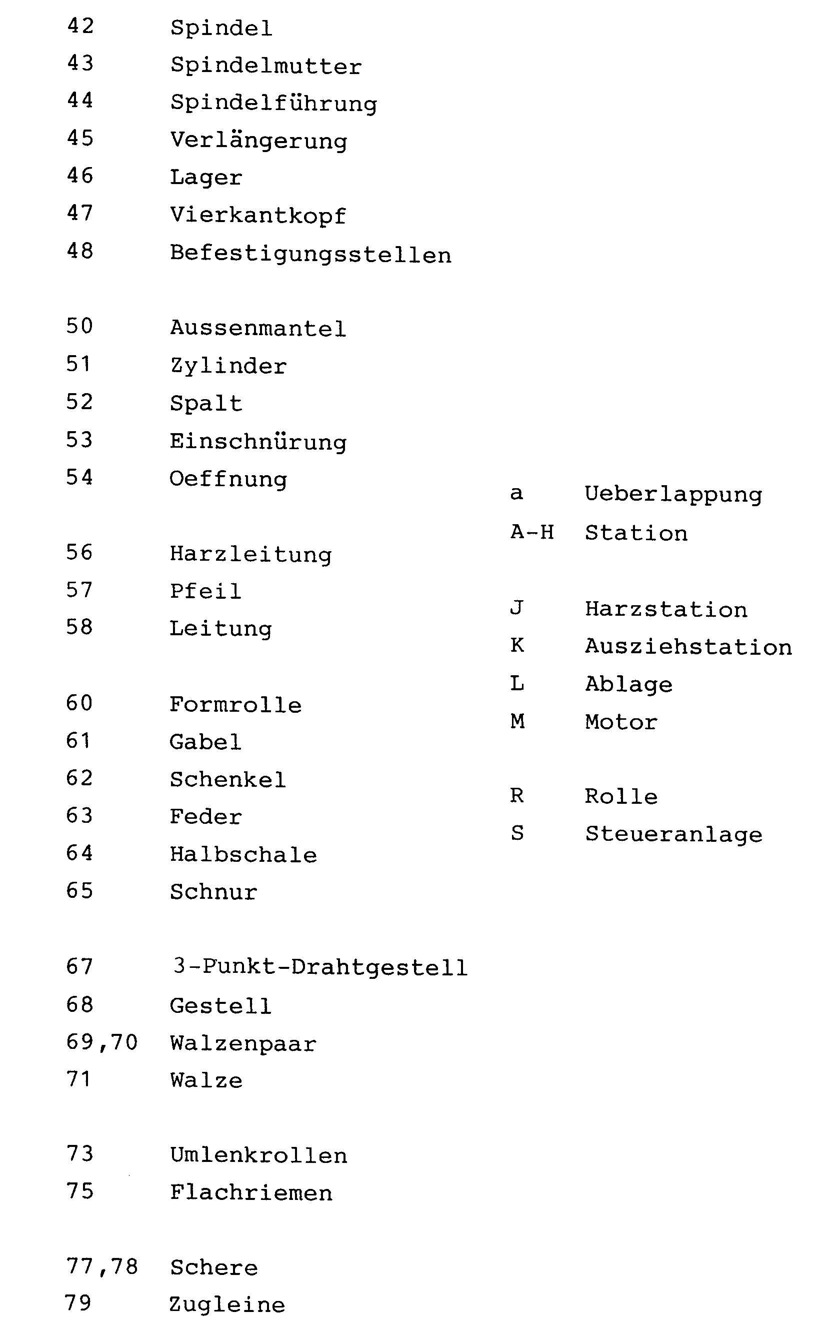

## Patentansprüche

1. Schlauch mit einer aus biegsamen Materialbahnen zusammengesetzten Schlauchwand zum Auskleiden von Rohrleitungen und zur Herstellung von Rohren, **dadurch gekennzeichnet,** dass die Schlauchwand aus einer dehnbaren Aussenabdeckung (9), welche aus zwei Aussenbahnen (9.1, 9.2) mit miteinander verschweissten Längsrändern schlauchförmig zusammengesetzt ist, und aus mindestens einer im Innern der Aussenabdeckung (9) liegenden schlauchförmigen Zugbahn (7) aus Glasfaserbahnen, Matten besteht, deren Längsränder zu einer Ueberlappung (a) lose aufeinandergelegt sind, wobei die Zugbahn 7 harzimprägniert ist.

2. Schlauch nach Anspruch 1, **dadurch gekennzeichnet**, dass sich auf der Innenseite der mindestens einen Zugbahn (7) eine dehnbare Innenabdeckung (5) befindet, welche aus zwei Innenbahnen (5.1, 5.2) mit miteinander verschweissten Längsrändern (10) schlauchförmig zusammengesetzt ist.

3. Schlauch nach Anspruch 1 und 2, **dadurch gekennzeichnet,** dass der mindestens einen Zugbahn (7) mindestens eine schlauchförmige Vliesstoffbahn (6) unter Bildung einer Ueberlappung (a) beigefügt ist, wobei die Ueberlappungen (a) der Zugbahn (7) und der Vliesstoffbahn (6) mit Abstand zueinander versetzt angeordnet sind.

4. Schlauch nach Anspruch 3, **dadurch gekennzeichnet,** dass auf der Innenseite der Aussenabdeckung (9) das Rutschen verhindernde Sicherungsbahnen (8.1,8.2) partiell verklebt angeordnet sind.

5. Schlauch nach Anspruch 3, **dadurch gekennzeichnet**, dass die Aussenabdeckung (9) pigmentiert oder aluminiumbeschichtet ist.

6. Verfahren zur Herstellung eines Schlauches mit einer aus biegsamen Materialbahnen zusammengesetzten Schlauchwand, **gekennzeichnet** durch die Schritte
- von Rollen (R) wird mindestens eine Materialbahn (6,7) abgewickelt und schlauchförmig um einen stationären Kern (4) verlegt, wobei die Längsränder der Materialbahn zu einer Ueberlappung (a) übereinandergelegt und um die Materialbahn aus zwei Materialbahnen (9.1, 9.2) durch Zusammenschweissen an ihren Längsrändern (10) eine Aussenabdeckung (9) gebildet wird
- die Materialbahn und die Innenseite der Aussenabdeckung (9) werden in einer Harzstation (J) zu einem kreisrunden Schlauch geformt und harzimprägniert, wobei nur die Materialbahn und die Innenseite der Aussenabdeckung mit Harz beaufschlagt werden
- nach dem Verlassen der Harzstation wird der aus der Materialbahn und der Aussenabdeckung gebildete Schlauch flachgedrückt und durch eine Ausziehstation (K) abtransportiert

7. Verfahren nach Anspruch 6, **dadurch gekennzeichnet,** dass zuerst aus zwei Materialbahnen durch Zusammenschweissen an ihren Längsrändern (10) eine schlauchförmige Innenabdeckung (5) gebildet und separat zu dem aus der Materialbahn und der Aussenabdeckung gebildeten Schlauch im Innern des Kerns (4) zur Harzstation (J) geführt wird, worauf die Innenabdeckung nach dem Verlassen der Harzstation und vor dem Flachdrücken des Schlauches entfaltet und an die Innenseite der Materialbahn gepresst wird.

8. Anlage zur Herstellung eines Schlauches mit einer aus biegsamen Materialbahnen zusammengesetzten Schlauchwand, **dadurch gekennzeichnet,** dass
- über einem auf Führungsrollen (25) frei gelagerten Kern (4) aus miteinander gekuppelten Kernsegementen (27) Stationen (A-H) mit über und unter dem Kern (4) Materialbahnen als Rollen (R) auf über die Kernbreite ragende Spannwellen (18) gelagert sind, die auch eine Anordnung der Rollen (R) seitlich zur Achse des Kerns (4) versetzt ermöglichen
- an den Kern (4) eine Harzstation (J) folgt, die aus einem, einen Kreiszylinder (51 mit einer Einschnürung (53) als Harzkammer umgebenden Aussenmantel (50) besteht, der einen Spalt (52) zur Durchleitung und Kalibrierung des Schlauches (1) bildet, wobei eine Harzzuleitung (56) und eine Schnur (65) zum Halten einer an die Harzstation anschliessenden Gabel (61) zum Oeffnen und Anpressen der im Kern (4) geführten Innenabdeckung (5) im Kern (4) verlegt sind und erst am Kernanfang bei der Station (B) den Kern (4) verlassen, während der Zylinder (51) mit einem Draht (67) an der Stirnseite des Kerns (4) befestigt ist
- nach der Harzstation eine Ausziehstation (K) zum Transport des Schlauches (1) durch die Anlage folgt, in der zwei angetriebene Walzenpaare (69,70) und dazwischen eine höhenverstellbare, ebenfalls angetriebene Walze (71) von einem Flachriemen (74) umschlungen sind, der durch die Walzenpaare (69,70) und um die Unterseite der Walze (71) unter Bildung einer Schlaufe läuft, innerhalb welcher der Schlauch mitgenommen wird.

9. Anlage nach Anspruch 8, **dadurch gekennzeichnet,** dass das Kernsegment (27) aus einem aus zwei U-Profilen (36) und einem Steg (35) gebildeten Mittelteil (31) und zwei Randstücken (32) besteht, wobei jedem Randstück (32) ein Spindeltrieb (42-45) zur Einstellung der Breite des Kernsegmentes (27) zugeordnet ist, der durch eine Oeffnung (54) in den Randstücken (32) zugänglich ist.

10. Anlage nach Anspruch 9, **dadurch gekennzeichnet**, dass zur Führung der Randstücke (32) Schlitze (34) in dem ebenen Teil (39) derselben in Bewegungsrichtung angeordnet sind, wobei sich der ebene Teil (39) unter einer Abdeckung (37) des Mittelteils (31) bewegt, welche mit Befestigungsstellen (48) unter Bildung eines Spaltes (33) an dem U-Profil (36) des Mittelteils(31) befestigt ist, wobei die Befestigungsstellen (48) eine Führung für die Schlitze (34) bilden.
